(19) Europäisches Patentamt
European Patent Office
Office européen des brevets

(11) EP 4 502 050 A1

(12) **EUROPEAN PATENT APPLICATION**
published in accordance with Art. 153(4) EPC

(43) Date of publication:
**05.02.2025 Bulletin 2025/06**

(21) Application number: **23780825.8**

(22) Date of filing: **30.03.2023**

(51) International Patent Classification (IPC):
***C08L 29/04*** *(2006.01)* ***B32B 27/28*** *(2006.01)*
***C08F 8/00*** *(2006.01)* ***C08F 210/02*** *(2006.01)*
***C08F 216/06*** *(2006.01)* ***C08K 3/11*** *(2018.01)*
***C08L 23/08*** *(2025.01)*

(52) Cooperative Patent Classification (CPC):
**C08K 3/22; B32B 27/28; C08F 8/00; C08F 8/14; C08F 210/02; C08F 216/06; C08J 3/203; C08K 3/11; C08L 23/08; C08L 29/04;**
C08J 2329/04; C08K 2003/2237

(86) International application number:
**PCT/JP2023/013066**

(87) International publication number:
**WO 2023/190817 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.03.2022 JP 2022057031**

(71) Applicant: **Mitsubishi Chemical Corporation**
**Tokyo 100-8251 (JP)**

(72) Inventor: **ITO, Takuya**
**Tokyo 100-8251 (JP)**

(74) Representative: **Hoffmann Eitle**
**Patent- und Rechtsanwälte PartmbB**
**Arabellastraße 30**
**81925 München (DE)**

# (54) MODIFIED ETHYLENE-VINYL ALCOHOL COPOLYMER COMPOSITION, PELLET, MULTILAYER STRUCTURE, METHOD FOR PRODUCING MODIFIED ETHYLENE-VINYL ALCOHOL COPOLYMER COMPOSITION, AND METHOD FOR PRODUCING MULTILAYER STRUCTURE

(57) An ethylene-vinyl alcohol copolymer composition that allows suppression of thermal degradation during melt molding is provided as follows. A modified ethylene-vinyl alcohol copolymer composition contains a modified ethylene-vinyl alcohol copolymer including an aliphatic polyester unit, and a titanium compound. The amount of the titanium compound on a metal basis is 0.001 ppm or more and less than 5 ppm per mass of the modified ethylene-vinyl alcohol copolymer composition.

EP 4 502 050 A1

## Description

TECHNICAL FIELD

The present disclosure relates to a modified ethylene-vinyl alcohol copolymer composition including an aliphatic polyester unit, pellets, a multilayer structure, a method for producing a modified ethylene-vinyl alcohol copolymer composition, and a method for producing a multilayer structure.

BACKGROUND ART

An ethylene-vinyl alcohol copolymer (which hereinafter may be referred to as "EVOH resin") is excellent in transparency, oxygen and other gas barrier properties, aroma retention, solvent resistance, oil resistance, mechanical strength, and the like, and is formed into films, sheets, bottles, and the like and widely used as various packaging materials, such as food, pharmaceutical products, industrial chemicals, and agricultural chemicals packaging materials.

However, the EVOH resin has a hydroxyl group relatively active in a molecule and therefore tends to be easily degraded by heat, causing coloring during melt molding. In addition, the EVOH resin is a hard and brittle resin and lacks flexibility.

In connection with the above problem, for example, JP-A-2019-163379 discloses a modified EVOH resin including an aliphatic polyester unit, in which the yellowness index (YI) value of its molded product is smaller than a particular value, thereby suppressing degradation and coloring after thermoforming.

SUMMARY

PROBLEMS TO BE SOLVED BY THE DISCLOSURE

The modified EVOH resin described in JP-A-2019-163379 can suppress coloring. However, with diversified feedblock and die designs in molding apparatuses and with demands for increasing functionality such as thinner films and more layers of multilayer structures in end products in recent years, the molding apparatuses have become more complicated with increased functionality. The resin tends to be thermally degraded in such molding apparatuses, resulting in lower productivity of products. This leads to a demand for further improvement.

The present disclosure provides a modified EVOH resin composition that allows suppression of thermal degradation during melt molding.

MEANS FOR SOLVING THE PROBLEMS

In view of such a situation, the inventor of the present disclosure has found that a modified EVOH resin composition that allows suppression of thermal degradation during melt molding can be obtained by adding a particular minute amount of a titanium compound to a modified EVOH resin including an aliphatic polyester structural unit.

Specifically, the present disclosure has the following aspects.

[1] A modified EVOH resin composition comprising: a modified EVOH resin including an aliphatic polyester structural unit; and a titanium compound, wherein the amount of the titanium compound on a metal basis is 0.001 ppm or more and less than 5 ppm per mass of the modified EVOH resin composition.

[2] The modified EVOH resin composition according to [1], wherein a modification rate of the aliphatic polyester structural unit in the modified EVOH resin is 0.1 to 30 mol%.

[3] The modified EVOH resin composition according [1] or [2], wherein the aliphatic polyester structural unit included in the modified EVOH resin has an average chain length of 1.5 to 3.0.

[4] The modified EVOH resin composition according to any one of [1] to [3], wherein the aliphatic polyester structural unit is a ring-opened polymer of lactones.

[5] Pellets comprising the modified EVOH resin composition according to any one of [1] to [4].

[6] A multilayer structure comprising at least one layer comprising the modified EVOH resin composition according to any one of [1] to[4].

[7] A method for producing the modified EVOH resin composition according to any one of [1] to [4], the method comprising melt-mixing a composition raw material comprising the modified EVOH resin and a titanium compound.

[8] A method for producing the multilayer structure according to [6], the method comprising melt-molding a layer comprising the modified EVOH resin composition.

## EFFECTS OF THE DISCLOSURE

The modified EVOH resin composition according to the present disclosure has excellent thermal stability and therefore allows suppression of thermal degradation of the modified EVOH resin during melt molding.

## EMBODIMENTS OF THE DISCLOSURE

Hereinafter the present disclosure will be described more specifically based on exemplary embodiments of the present disclosure. However, the present disclosure is not limited to these embodiments.
In the present disclosure, the expression "X to Y" (X and Y are given numbers) is intended to encompass "preferably greater than X" or "preferably less than Y" unless otherwise specified, in addition to the meaning of "X or more and Y or less".
Further, the expression "X or more" (X is a given number) or "Y or less" (Y is a given number) is intended to encompass the meaning "preferably more than X" or "preferably less than Y".

### <EVOH Resin Composition>

A modified EVOH resin composition according to an embodiment of the present disclosure (hereinafter referred to as "present modified EVOH resin composition") contains a modified EVOH resin including an aliphatic polyester unit as a main component, and a particular minute amount of a titanium compound.
Specifically, the present modified EVOH resin composition includes a modified EVOH resin as a base resin. The content of the modified EVOH resin in the present modified EVOH resin composition is typically 70% by mass or more, preferably 80% by mass or more, more preferably 90% by mass or more, and particularly preferably 95% by mass or more.
Each component will be described below.

### [Modified EVOH Resin]

The modified EVOH resin includes an aliphatic polyester structural unit. Especially, it is preferable that an aliphatic polyester structural unit is bonded to a side chain of the EVOH resin, that is, an aliphatic polyester structural unit is grafted to the EVOH resin in order to ensure gas barrier properties and flexibility.
It is preferable that the aliphatic polyester structural unit is a ring-opened polymer of lactones in that the reaction is simple and in terms of less bleeding, fewer adhesion defects, less evaporation during melt molding, and less contamination in work environment. Such a modified EVOH resin can be obtained, for example, by a ring-opening polymerization reaction and a graft reaction of lactones in the presence of an EVOH resin.
The modified EVOH resin will be described in detail below.

### [EVOH resin]

An EVOH resin serving as a raw material of the modified EVOH resin is a non-water-soluble thermoplastic resin usually obtained by saponifying an ethylene-vinyl ester copolymer which is a copolymer of ethylene and a vinyl ester monomer.
Typically, vinyl acetate is used as the vinyl ester monomer, in terms of commercial availability and high efficiency in impurity treatment during manufacture. Other examples of the vinyl ester monomer other than vinyl acetate include aliphatic vinyl esters such as vinyl formate, vinyl propionate, vinyl valerate, vinyl butyrate, vinyl isobutyrate, vinyl pivalate, vinyl caprate, vinyl laurate, vinyl stearate, and vinyl versatate, and aromatic vinyl esters such as vinyl benzoate. Typically, an aliphatic vinyl ester having 3 to 20 carbon atoms, preferably 4 to 10 carbon atoms, and particularly preferably 4 to 7 carbon atoms is used. Typically, these are used alone, but multiple kinds may be used at the same time.
The copolymerization of the ethylene and the vinyl ester monomer can be performed by any known polymerization method such as a solution polymerization method, a suspension polymerization method, or an emulsion polymerization method. Typically, solution polymerization using methanol as a solvent is used. The saponification of the resulting ethylene-vinyl ester copolymer may be performed by a known method.
The thus produced EVOH resin mainly contains a structural unit derived from ethylene and a vinyl alcohol structural unit, and further contains a small amount of a vinyl ester structural unit left unsaponified.
The ethylene structural unit content in the EVOH resin is typically 20 to 60 mol%, preferably 25 to 50 mol%, and particularly preferably 25 to 35 mol%. The ethylene structural unit content can be controlled by the pressure of ethylene when the vinyl ester monomer and ethylene are copolymerized. If the content is too low, the gas barrier properties in high humidity and the melt moldability tend to be reduced. Conversely, if too high, gas barrier properties tend to be reduced.
It is noted that the ethylene structural unit content can be measured in conformity with ISO14663.

The degree of saponification in the EVOH resin is typically 90 to 100 mol%, preferably 95 to 100 mol%, and particularly preferably 99 to 100 mol%. The degree of saponification can be controlled by the amount of a saponification catalyst (usually, an alkaline catalyst such as sodium hydroxide is used), temperature, time and the like when the ethylene-vinyl ester copolymer is saponified. If the degree of saponification is too low, gas barrier properties, thermal stability, moisture resistance, and the like tend to be reduced.

The degree of saponification of the EVOH resin can be measured in conformity with JIS K6726 (where a solution obtained by homogeneously dissolving the EVOH resin in a water/methanol solvent is used).

The melt flow rate (MFR) (at 210°C with a load of 2160 g) of the EVOH resin is typically 0.5 to 100 g/10 minutes, preferably 1 to 50 g/10 minutes, and particularly preferably 3 to 35 g/10 minutes. If this MFR is too high, the stability during film formation tends to be impaired. If too low, viscosity becomes too high and melt extrusion tends to be difficult.

The MFR serves as an indicator of the degree of polymerization of the EVOH resin and can be adjusted by the amount of polymerization initiator and/or the amount of solvent when ethylene and a vinyl ester monomer are copolymerized.

The EVOH resin may further contain a structural unit derived from any of the following comonomers in a range that does not impair the effects of the present disclosure (for example, 10 mol% or less of the EVOH resin).

Examples of the comonomers include olefins such as propylene, 1-butene, and isobutene; hydroxyl-containing $\alpha$-olefins such as 3-buten-1-ol, 3-butene-1,2-diol, 4-penten-1-ol, and 5-hexene-1,2-diol, and derivatives including esterification products and acylation products of these hydroxyl-containing $\alpha$-olefins; hydroxyalkylvinylidenes such as 2-methylenepropane-1,3-diol and 3-methylenepentane-1 ,5-diol; hydroxyalkylvinylidene diacetates such as 1,3-diacetoxy-2-methylenepropane, 1,3-dipropionyloxy-2-methylenepropane, and 1,3-dibutyryloxy-2-methylenepropane; unsaturated acids such as acrylic acid, methacrylic acid, crotonic acid, phthalic acid (anhydride), maleic acid (anhydride), and itaconic acid (anhydride), salts of these acids, and mono- or dialkyl esters of these acids, the one or two alkyl groups each having 1 to 18 carbon atoms; acrylamide and analogues thereof such as N-alkylacrylamides in which the alkyl has 1 to 18 carbon atoms, N,N-dimethylacrylamide, 2-acrylamidopropanesulfonic acid and salts thereof, and acrylamidopropyldimethylamine and acid salts or quaternary salts thereof; methacrylamide and analogues thereof such as N-alkylmethacrylamides in which the alkyl has 1 to 18 carbon atoms, N,N-dimethylmethacrylamide, 2-methacrylamidopropanesulfonic acid and salts thereof, and methacrylamidopropyldimethylamine and acid salts or quaternary salts thereof; N-vinylamides such as N-vinylpyrrolidone, N-vinylformamide, and N-vinylacetamide; vinyl cyanide compounds such as acrylonitrile and methacrylonitrile; vinyl ethers such as alkyl vinyl ethers in which the alkyl has 1 to 18 carbon atoms, hydroxyalkyl vinyl ethers, and alkoxyalkyl vinyl ethers; halogenated vinyl compounds such as vinyl chloride, vinylidene chloride, vinyl fluoride, vinylidene fluoride, and vinyl bromide; vinyl silane compounds such as trimethoxyvinylsilane; halogenated allylated compounds such as allyl acetate and allyl chloride; allyl alcohol compounds such as allyl alcohol and dimethoxyallyl alcohol; trimethyl(3-acrylamido-3-dimethylpropyl)ammonium chloride, and acrylamido-2-methylpropanesulfonic acid. These can be used alone or in combination of two or more.

Among these, hydroxyl-containing $\alpha$-olefins are preferred. Especially, 3-butene-1,2-diol and 5-hexene-1,2-diol are preferred. When the hydroxyl-containing $\alpha$-olefins are copoymerized, the resulting EVOH resin has a primary hydroxyl group in a side chain. Such an EVOH resin having a primary hydroxyl group in a side chain, especially, an EVOH resin having a 1,2-diol structure in a side chain, is preferred in that secondary formability is good while maintaining gas barrier properties.

When the EVOH resin has a primary hydroxyl group in a side chain, the content of the structural unit derived from a monomer having the primary hydroxyl group is typically 0.1 to 20 mol% of the EVOH resin, preferably 0.5 to 15 mol%, particularly preferably 1 to 10 mol%.

[Lactones]

As previously mentioned, the ring-opening polymerization of lactones form an aliphatic polyester structural unit, and the graft reaction of the aliphatic polyester structural unit with an EVOH resin results in a modified EVOH resin. Such lactones are not limited as long as the number of carbon atoms that constitute a lactone ring is 3 to 10.

The lactones are represented by the following general formula (1) when they have no substituent.

[Chem. 1]

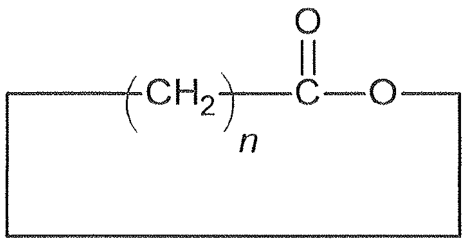

· · · (1)

In the above general formula (1), n is an integer of 2 to 9, preferably 4 to 5. Any of the carbon atoms included in the alkylene chain ($-(CH_2)_n-$) in the above general formula may have a substituent such as a lower alkyl group having 1 to 8 carbon atoms, a lower alkoxy group having 1 to 8 carbon atoms, a cycloalkyl group, a phenyl group, or an aralkyl group. Further, the number of substituents may be one or two or more.

Specific examples of the lactones include β-propiolactones, γ-butyrolactones, ε-caprolactones, and δ-valerolactones.

Examples of the β-propiolactones include β-propiolactone and dimethylpropiolactone.

Examples of the γ-butyrolactones include γ-butyrolactone, γ-valerolactone, γ-caprolactone, γ-capryrolactone, γ-laurolactone, γ-palmitolactone, γ-stearolactone, crotonolactone, α-angelicalactone, and β-angelicalactone.

Examples of the ε-caprolactones include ε-caprolactone, monoalkyl-ε-caprolactones such as monomethyl-ε-caprolactone, monoethyl-ε-caprolactone, monodecyl-ε-caprolactone, and monopropyl-ε-caprolactone; dialkyl-ε-caprolactones in which two alkyl groups are substituted for carbon atoms at positions other than the ε-position; trialkyl-ε-caprolactones in which three alkyl groups are substituted for carbon atoms at positions other than the ε-position; alkoxy-ε-caprolactones such as ethoxy-ε-caprolactone; cycloalkyl-lactones such as cyclohexyl-ε-caprolactone; aralkyl-ε-caprolactones such as benzyl-ε-caprolactone; and aryl-ε-caprolactones such as phenyl-ε-caprolactone.

Examples of the δ-valerolactones include 5-valerolactone, 3-methyl-5-valerolactone, 3,3-dimethyl-5-valerolactone, 2-methyl-5-valerolactone, and 3-ethyl-5-valerolactone.

These lactones can be used alone or in combination of two or more. Among these, in terms of reactivity, ε-caprolactones or δ-valerolactones are preferred. In terms of inexpensiveness and easy availability, ε-caprolactones are more preferred, and ε-caprolactone is particularly preferred.

[Method for Producing Modified EVOH Resin]

The modified EVOH resin can be obtained by a ring-opening polymerization reaction of lactones in the presence of the EVOH resin and a graft reaction of the aliphatic polyester structural unit resulting from the ring-opening polymerization with a hydroxyl group of the EVOH resin at the initiation end.

The ring-opening polymerization reaction of the lactones and the graft reaction are usually performed in a molten state of the EVOH resin. For example, these reactions are performed while materials including the EVOH resin, the lactones, and a catalyst are heated and stirred in a stirring tank-type manufacturing apparatus with a stirrer, an extruder, or the like. In particular, the method using an extruder is preferred.

Examples of the extruder include single-screw extruder, twin-screw extruder, Banbury mixer, kneader, and Brabender (for example, TEX series available from The Japan Steel Works, Ltd., HYPERKTX series available from Kobe Steel, Ltd., TEM series available from Shibaura Machine Co., Ltd., and KRC kneader series available from Kurimoto, Ltd.). Extruders that allow the graft reaction of the EVOH resin to be continuously performed by melt kneading (which is referred to as continuous type) can be used.

The continuous type is a method in which a resin composition is continuously synthesized by sequentially charging various raw materials into an extruder to allow a reaction to proceed under stirring at a predetermined temperature. In this method, charging of the raw materials and discharging of the resin composition are performed simultaneously.

The amount of the lactones used per EVOH resin can be selected as appropriate so that a predetermined amount of aliphatic polyester units is contained in the EVOH resin. The amount of the lactones is typically 1 to 200 parts by mass, preferably 10 to 150 parts by mass, and particularly preferably 20 to 100 parts by mass per 100 parts by mass of the EVOH resin. If the amount of lactones used is too small, the flexibility tends to be reduced. On the other hand, the amount of lactones used is too large, the gas barrier properties tend to be reduced.

Conventionally known ring-opening polymerization catalysts for lactones can be used as the catalyst. Examples of the catalyst include titanium compounds and tin compounds.

Examples of the titanium compounds include titanium alkoxides such as tetra-n-butoxy titanium, tetraisobutoxy titanium, and tetraisopropoxy titanium. Examples of the tin compounds include tin alkoxides such as dibutyl dibutoxy tin, and tin ester compounds such as tin 2-ethylhexanoate and dibutyl tin diacetate. These may be used alone or in

combination of two or more. Among these, tin compounds are preferred, tin ester compounds are more preferred, and tin 2-ethylhexanoate are particularly preferred.

The amount of the catalyst used is typically 0.01 to 10 parts by mass, preferably 0.05 to 8 parts by mass, and particularly preferably 0.1 to 5 parts by mass per 100 parts by mass of lactones. If the amount of the catalyst used is too small or too large, the modification rate tends to be reduced.

The reaction temperature in the ring-opening polymerization reaction and the graft reaction is typically 50 to 250°C, preferably 100 to 240°C, and even more preferably 150 to 230°C to bring about a molten state. If the reaction temperature is too high, the modified EVOH resin tends to be thermally degraded. On the other hand, if the reaction temperature is too low, the graft reaction tends to not proceed.

The reaction time in the ring-opening polymerization reaction and the graft reaction is typically 1 second to 1.5 hours, preferably 3 seconds to 1.25 hours, even more preferably 5 seconds to 1 hour, and particularly preferably 7 seconds to 45 minutes. If the reaction time is too long, the modified EVOH resin is thermally degraded to cause an extreme increase in viscosity of the modified EVOH resin and thermal degradation products in the modified EVOH resin, so that a gel tends to occur during formation of films or the like. On the other hand, if the reaction time is too short, the graft reaction of the EVOH resin does not proceed and the unmodified EVOH resin tends to increase.

It is noted that the ring-opening polymerization reaction and the graft reaction are performed preferably under a nitrogen flow in order to prevent degradation of the EVOH resin.

It is also preferable to remove unreacted monomers after the reaction in order to prevent odor. Examples of the method of removing unreacted monomers include immersion in a solution in which unreacted monomers are dissolved, and removal under reduced pressure. In terms of production efficiency, the method of removal under reduced pressure is preferred. The method of removal under reduced pressure can be performed at the same setting temperature as the reaction temperature under a pressure of 100 to 101200 Pa for 1 second to 10 hours.

The modified EVOH resin is thus obtained. The content of the EVOH resin structural unit that forms a backbone of the obtained modified EVOH resin is typically 40 to 99% by mass, preferably 45 to 95% by mass, and particularly preferably 50 to 90% by mass. If the content of the EVOH resin structural unit in the modified EVOH resin is too high, the flexibility tends to be reduced. On the other hand, if the content of the EVOH resin structural unit is too low, the gas barrier properties tend to be reduced.

The content of the aliphatic polyester structural unit grafted to the EVOH resin is typically 1 to 60% by mass, preferably 5 to 55% by mass, and particularly preferably 10 to 50% by mass.

The modification rate of the aliphatic polyester structural unit in the modified EVOH resin is preferably 0.1 to 30 mol%, more preferably 1 to 20 mol%, and particularly preferably 5 to 15 mol%. This modification rate means the proportion of the EVOH resin structural unit grafted by the aliphatic polyester. If the modification rate of the modified EVOH resin is too low, the flexibility tends to be reduced. On the other hand, if the modification rate of the modified EVOH resin is too high, the gas barrier properties tend to be reduced.

The average chain length of the aliphatic polyester structural unit grafted to the EVOH resin is preferably 1.5 to 3.0, more preferably 1.6 to 2.8, and particularly preferably 1.7 to 2.5. If the average chain length of the aliphatic polyester unit is too long, the gas barrier properties tend to be reduced. It is noted that the average chain length of the aliphatic polyester structural unit represents the degree of polymerization when lactones are ring-opening polymerized.

The content of the EVOH resin structural unit in the modified EVOH resin, the content of the grafted aliphatic polyester unit, the modification rate of the modified EVOH resin, and the average chain length of the aliphatic polyester unit can be calculated from $^1$H-NMR measurement results.

The number average molecular weight of the modified EVOH resin is typically 10000 to 300000, preferably 12500 to 200000, and particularly preferably 15000 to 100000. If the number average molecular weight of the modified EVOH resin is too high, the gas barrier properties tend to be reduced. On the other hand, if the number average molecular weight of the modified EVOH resin is too low, the flexibility tends to be reduced.

It is noted that the number average molecular weight is a value measured by gel permeation chromatography (GPC) using polystyrene standard.

The modified EVOH resin has a melting point of typically 40 to 200°C, preferably 60 to 180°C, more preferably 80 to 160°C, and particularly preferably 100 to 140°C. If the melting point of the modified EVOH resin is too high, the flexibility tends to be reduced. On the other hand, if the melting point of the modified EVOH resin is too low, the gas barrier properties tend to be reduced.

It is noted that the melting point of the modified EVOH resin can be measured using a differential scanning calorimeter.

In general, grafting the aliphatic polyester structural unit weakens the intermolecular force such as hydrogen bonding between hydroxyl groups in the backbone EVOH resin. Therefore, if the modification rate of the modified EVOH resin is high, the melting point of the modified EVOH resin tends to be low.

[Titanium Compound]

Examples of the titanium compound include inorganic titanium compounds and organic titanium compounds. The titanium compounds may be used alone or in combination of two or more. Among these, inorganic titanium compounds are preferred.
Examples of the inorganic titanium compounds include titanium oxides, titanium hydroxides, titanium chlorides, and inorganic salts of titanium.
Examples of the titanium oxides include titanium(II) oxide, titanium(III) oxide, titanium(IV) oxide, and titanium suboxide.
Examples of the titanium hydroxides include titanous hydroxide and titanic hydroxide.
Examples of the titanium chlorides include titanous chloride and titanic chloride.
Examples of the inorganic salts of titanium include titanium phosphate and titanium sulfate.
Among these, titanium oxides are preferred, titanium(IV) oxide is more preferred, and rutile titanium(IV) oxide is particularly preferred.
Examples of the organic titanium compounds include titanium carboxylates such as titanium acetate, titanium butyrate, and titanium stearate.
It is noted that the titanium compound may be present as a titanium compound in the modified EVOH resin composition, or may be present in an ionized form or in a complex form interacting with the modified EVOH resin or other ligands.
The titanium compound has an average particle diameter of typically 0.001 to 100 μm, preferably 0.01 to 50 μm, and more preferably 0.015 to 20 μm. When the average particle diameter of the titanium compound is within the above range, degradation by heat tends to be suppressed.
The amount of the titanium compound on a metal basis is 0.001 ppm or more and less than 5 ppm per mass of the modified EVOH resin composition. The amount of the titanium compound on a metal basis is preferably 0.01 to 3 ppm, more preferably 0.03 to 1 ppm, and particularly preferably 0.05 to 0.5 ppm. When the amount of the titanium compound is within the above range, degradation by heat during melt molding can be suppressed. If the amount of the titanium compound is too small, the effect of suppressing degradation by heat is reduced. If too large, thermal decomposition of the modified EVOH resin easily occurs to cause coloring.
In general, modified EVOH resins are degraded by heat. This is presumably because heat degrades the modified EVOH resin to produce a radical, the radical causes dehydration of the hydroxyl group in the modified EVOH resin to generate a double bond in the main chain of the modified EVOH resin, and this site serves as a reaction starting point to further promote dehydration, resulting in a conjugated polyene structure in the main chain of the modified EVOH resin.
By contrast, since the present modified EVOH resin composition contains a particular minute amount of titanium compound, thermal degradation of the modified EVOH resin is suppressed.
Usually, when an EVOH resin composition contains a titanium compound, the EVOH resin composition may be thermally decomposed because of titanium ions. It is therefore common in the art that those skilled in the art would avoid the use of a titanium compound. However, in the present disclosure, to the contrary of such common knowledge, it has been found that the use of a particular minute amount of titanium compound results in a modified EVOH resin composition that allows thermal degradation to be suppressed.
More specifically, titanium is stable as a tetravalent ion and, even in a minute amount, coordinates to the double bond in the main chain of the modified EVOH resin as described above to be chelated and stabilized. Presumably, this suppresses the formation of a polyene structure.
On the other hand, if the amount of the titanium compound is too large, thermal decomposition of the modified EVOH resin due to the titanium compound may occur.

[Other Thermoplastic Resins]

The present modified EVOH resin composition can contain a thermoplastic resin(s) other than the modified EVOH resin in a range that does not impair the effects of the present disclosure (for example, typically 30% by mass or less, preferably 20% by mass or less, particularly preferably 10% by mass or less of the present modified EVOH resin composition).
Known thermoplastic resins can be used as other thermoplastic resin(s). Examples include EVOH resins, polyester resins, polystyrene resins, polyvinyl chloride resins, polycarbonate resins, ionomers, polyvinylidene chlorides, polyester elastomers, polyurethane elastomers, chlorinated polyethylenes, and chlorinated polypropylenes. These can be used alone or in combination of two or more.

[Other Additives]

The present modified EVOH resin composition may contain additives that are typically blended with EVOH resins in a range that does not impair the effects of the present disclosure. Examples of the additives that can be blended include inorganic double salts (e.g., hydrotalcite), plasticizers (e.g., aliphatic polyhydric alcohols such as ethylene glycol, glycerin, and hexanediol), oxygen absorbers [e.g., inorganic oxygen absorbers such as aluminum powder and potassium sulfite; ascorbic acid, and fatty acid esters and metal salts thereof, polyvalent phenols such as gallic acid and hydroxyl-containing phenolic aldehyde resins, terpene compounds, blends of tertiary hydrogen-containing resins and transition metals (e.g. combination of polypropylene and cobalt), blends of carbon-carbon unsaturated bond-containing resins and transition metals (e.g. combination of polybutadiene and cobalt), photo-oxidative degradable resins (e.g. polyketone), anthraquinone polymers (e.g. polyvinylanthraquinone), and polymer oxygen absorbers obtained by adding photoinitiators (e.g. benzophenone), other antioxidants, and deodorants (e.g. activated carbon) to these blends], heat stabilizers, photostabilizers, UV absorbers, colorants, antistatic agents, surfactants (except those used as lubricants), antimicrobial agents, antiblocking agents, and fillers (e.g. inorganic fillers). These compounds can be used alone or in combination of two or more.

[Method for Producing EVOH Resin Composition]

The present modified EVOH resin composition can be produced, for example, by mixing the modified EVOH resin and the titanium compound by any known method, for example, dry blending method, melt mixing method, solution mixing method, or impregnation method. Among these, it is preferable that the present modified EVOH resin composition is produced by a method including a step of melt-mixing a composition raw material containing the modified EVOH resin and the titanium compound. These production methods may be combined as appropriate.

An example of the dry blending method is a method (i) in which pellets of the modified EVOH resin and the titanium compound are dry-blended by using a tumbler or the like.

Examples of the melt mixing method include a method (ii) in which pellets of the modified EVOH resin and the titanium compound are dry-blended and the resulting dry blend is melt-kneaded, and a method (iii) in which the titanium compound is added to and melt-kneaded with the modified EVOH resin in a molten state.

Examples of the solution mixing method include a method (iv) in which the titanium compound is added to a solution prepared by using pellets of a commercially available modified EVOH resin, and the resulting solution is solidified, and then the solids are separated from liquid by known means and dried, and a method (v) in which the titanium compound is added to an ethylene-vinyl ester copolymer solution before saponification or a homogeneous solution (water/alcohol solution or the like) of the EVOH resin in the production process of the modified EVOH resin, and the resulting solution is solidified, and then the solids are separated from liquid by known means and dried.

An example of the impregnation method is a method (vi) in which pellets of the modified EVOH resin are brought into contact with an aqueous solution containing the titanium compound so that the titanium compound is incorporated into the modified EVOH resin, and then the resulting pellets are dried.

As the aqueous solution containing the titanium compound, an aqueous solution of the titanium compound or an elution of titanium ions obtained by immersing the titanium compound in water containing various chemicals can be used.

In the impregnation method, the amount of the titanium compound (on a metal basis) can be controlled by the concentration of the titanium compound in the aqueous solution in which the modified EVOH resin is immersed, the immersion temperature, the immersion time, and the like.

The immersion time is typically 0.5 to 48 hours, preferably 1 to 36 hours, and the immersion temperature is typically 10 to 40°C, preferably 20 to 35°C.

Various drying methods can be employed as the drying method in the above production methods. Either stationary drying or fluidized drying can be employed. These may be combined.

As previously mentioned, in the present disclosure, the above different methods can be combined. Among these, the melt mixing method is preferred, and especially the method (ii) is preferred, in terms of productivity and obtaining a resin composition with more significant effects of the present disclosure. Further, when the other thermoplastic resin(s) and other additives are used, they can be blended by an ordinary method in accordance with the above production method.

The present modified EVOH resin composition thus obtained by the above production methods can have any shape but preferably are pellets.

The pellets may each have, for example, spherical shape, oval shape, cylindrical shape, cubic shape, square prism shape, or the like. Typically the pellets have the oval shape or the cylindrical shape. The oval pellets each have a minor diameter of typically 1 to 10 mm, preferably 2 to 6 mm, and even more preferably 2.5 to 5.5 mm, and a major diameter of typically 1.5 to 30 mm, preferably 3 to 20 mm, and even more preferably 3.5 to 10 mm in view of convenience when the pellets are used as a molding material later. The cylindrical pellets each have a bottom diameter of typically 1 to 6 mm, preferably 2 to 5 mm, and a length of typically 1 to 6 mm, preferably 2 to 5 mm.

It is preferable that the pellets of the modified EVOH resin used in the above production methods have similar shape and size.

The present modified EVOH resin composition allows suppression of thermal degradation during melt molding. The weight loss rate of the present modified EVOH resin composition is typically 9.3% or less, preferably 9.1% or less, and particularly preferably 8.9% or less. The smaller the lower limit of the weight loss rate, the better, but the lower limit is typically 1 %.

The difference of 0.1% in weight loss rate is very significant because the difference appears as a significant difference in yield in the actual production.

The weight loss rate is determined according to the following formula by measuring the mass using a thermogravimeter (Pyris 1 TGA available from Perkin Elmer, Inc.) for 5 mg of pellets of the present modified EVOH resin composition under a nitrogen atmosphere at a gas flow rate of 20 mL/min and a temperature of 230°C for one hour.

$$\text{Weight loss rate (\%)} = [(\text{weight before heating} - \text{weight after heating})/\text{weight before heating}] \times 100$$

The present modified EVOH resin composition has a water content of typically 0.01 to 0.5% by mass, preferably 0.05 to 0.35% by mass, and particularly preferably 0.1 to 0.3% by mass.

The water content of the present modified EVOH resin composition is measured and calculated by the following method.

The mass before drying ($W_1$) of the present modified EVOH resin composition is measured by an electronic balance, and then the present EVOH resin composition is dried at 150°C for five hours in a hot air dryer and cooled for 30 minutes in a desiccator. The mass after cooling ($W_2$) is measured, and the water content is calculated by the following expression.

$$\text{Water content (\% by mass)} = [(W_1 - W_2)/W_1] \times 100$$

Further, when the present modified EVOH resin composition is in the pellet shape, it is preferable to attach a known lubricant to the surfaces of the pellets in order to stabilize the feedability during melt molding. Examples of the lubricant include higher fatty acids having 12 or more carbon atoms (e.g. lauric acid, myristic acid, palmitic acid, stearic acid, behenic acid, oleic acid, etc.), higher fatty acid esters (methyl esters, isopropyl esters, butyl esters, octyl esters, etc. of higher fatty acids), higher fatty acid amides (e.g. saturated higher fatty acid amides such as lauric acid amide, myristic acid amide, palmitic acid amide, stearic acid amide, and behenic acid amide; unsaturated higher fatty acid amides such as oleamide and erucamide, and bis-higher fatty acid amides such as ethylenebisstearamide, ethylenebisoleamide, ethylenebiserucamide, and ethylenebislauramide), low molecular weight polyolefins (e.g. low molecular weight polyethylene with a molecular weight of about 500 to 10000, or low molecular weight polypropylene, or acid modified products thereof), higher alcohols with 6 or more carbon atoms, ester oligomers, and ethylene fluoride resins. These compounds can be used alone or in combination of two or more. The lubricant content is typically 5% by mass or less of the present modified EVOH resin composition, preferably 1% by mass or less. The lower limit is typically 0% by mass.

The thus obtained present modified EVOH resin composition is prepared in various forms such as pellets, powder, and liquid and provided as a molding material for various molded articles. In particular, in the present disclosure, it is preferable that the present modified EVOH resin composition is provided as a material for melt molding, because if so, the effects of the present disclosure can be achieved more efficiently.

It is noted that the present modified EVOH resin composition includes a resin composition obtained by mixing a resin other than the modified EVOH resin used in the present modified EVOH resin composition.

Examples of the molded article include a monolayer film molded from the present modified EVOH resin composition and a multilayer structure having a layer made of the present modified EVOH resin composition.

[Multilayer Structure]

A multilayer structure according to an embodiment of the present disclosure (hereinafter referred to as "the present multilayer structure") includes a layer made of the present modified EVOH resin composition. A layer made of the present modified EVOH resin composition (hereinafter simply referred to as "present modified EVOH resin composition layer") can be laminated with other base material(s) mainly composed of a thermoplastic resin other than the present modified EVOH resin composition (hereinafter the resin used in the base material may be shortly referred to as "base material resin") to impart additional strength, protect the present modified EVOH resin composition layer from moisture or other effects, and impart another function.

Examples of the base material resin include (unmodified) polyolefin resins including polyethylene resins such as linear low-density polyethylenes, low-density polyethylenes, very-low-density polyethylenes, medium-density polyethylenes, high-density polyethylenes, ethylene-propylene (block and random) copolymers, and ethylene-α-olefin (α-olefin having 4 to 20 carbon atoms) copolymers, polypropylene resins such as polypropylenes and propylene-α-olefin (α-olefin having 4 to 20 carbon atoms) copolymers, polybutenes, polypentenes, and polycycloolefin resins (polymers having a cycloolefin structure in a main chain and/or a side chain thereof), polyolefin resins in a broader sense including modified olefin resins such as unsaturated carboxyl-modified polyolefin resins obtained by graft-modifying any of the aforementioned polyolefin resins with an unsaturated carboxylic acid or an unsaturated carboxylic acid ester, ionomers, ethylene-vinyl acetate copolymers, ethylene-acrylic acid copolymers, ethylene-acrylate copolymers, polyester resins, polyamide resins (including polyamide copolymers), polyvinyl chlorides, polyvinylidene chlorides, acrylic resins, polystyrene resins, vinyl ester resins, polyester elastomers, polyurethane elastomers, polystyrene elastomers, halogenated polyolefins such as chlorinated polyethylenes and chlorinated polypropylenes, and aromatic and aliphatic polyketones. These can be used alone or in combination of two or more.

Among these, the polyamide resins, the polyolefin resins, the polyester resins, and the polystyrene resins, which are hydrophobic resins, are preferred. The polyolefin resins such as the polyethylene resins, the polypropylene resins, the polycycloolefin resins, and the unsaturated carboxyl-modified polyolefin resins obtained by modifying these polyolefin resins are more preferred.

When the present modified EVOH resin composition layer is "a" (a1, a2, ...) and the base material resin layer is "b" (b1, b2, ...), the layered configuration of the present multilayer structure may be any combination, such as a/b, b/a/b, a/b/a, a1/a2/b, a/b1/b2, b2/b1/a/b1/b2, or b2/b1/a/b1/a/b1/b2. When the present multilayer structure includes a recycle layer R containing a mixture of the present modified EVOH resin composition and a thermoplastic resin(s) other than the present modified EVOH resin composition, which is obtained by re-melt-molding discards or defectives occurring in the process of producing the present multilayer structure, the layered configuration may be a combination such as b/R/a, b/R/a/b, b/R/a/R/b, b/a/R/a/b, or b/R/a/R/a/R/b. The total number of layers in the present multilayer structure is typically 2 to 15, preferably 3 to 10. In the above layered configurations, an adhesive resin layer containing an adhesive resin may be interposed between individual layers, if necessary.

A known adhesive resin can be used as the adhesive resin. The adhesive resin can be selected as appropriate depending on the kind of thermoplastic resin used in the base material resin layer "b". Typical examples include carboxyl-containing modified polyolefin polymers obtained by chemically bonding an unsaturated carboxylic acid or anhydride thereof to a polyolefin resin by addition reaction, graft reaction, or the like. Examples of the carboxyl-containing modified polyolefin polymers include polyethylenes graft-modified with maleic anhydride, polypropylenes graft-modified with maleic anhydride, ethylene-propylene (block and random) copolymers graft-modified with maleic anhydride, ethylene-ethyl acrylate copolymers graft-modified with maleic anhydride, ethylene-vinyl acetate copolymers graft-modified with maleic anhydride, polycycloolefin resins modified with maleic anhydride, and polyolefin resins graft-modified with maleic anhydride. These may be used alone or in combination of two or more.

In the present multilayer structure, when the adhesive resin layer is used between the present modified EVOH resin composition layer and the base material resin layer, it is preferable to use an adhesive resin having excellent hydrophobicity, because the adhesive resin layer is situated on both sides of the present modified EVOH resin composition layer.

The base material resin and the adhesive resin may contain plasticizer, filler, clay (such as montmorillonite), colorant, antioxidant, antistatic agent, lubricant, nucleating agent, antiblocking agent, wax, and the like as conventionally known, in a range that does not impair the spirit of the present disclosure (for example, 30% by mass or less, preferably 10% by mass or less of the entire resin). These can be used alone or in combination of two or more.

The lamination of the present modified EVOH resin composition layer and the base material resin layer (including the case where the adhesive resin layer is interposed) can be performed by a known method. Examples of the laminating method include: a method in which a film or a sheet of the present modified EVOH resin composition is laminated with the base material resin by melt extrusion; a method in which the base material resin layer is laminated with the present modified EVOH resin composition by melt extrusion; a method in which the present modified EVOH resin composition and the base material resin are co-extruded; a method in which the present modified EVOH resin composition (layer) and the base material resin (layer) are dry-laminated using a known adhesive agent such as organic titanium compound, isocyanate compound, polyester compound, or polyurethane compound; and a method in which a solution of the present modified EVOH resin composition is applied on the base material resin, and then the solvent is removed. Among these methods, in consideration of cost and environment, a method including a step of melt-molding the present modified EVOH resin composition layer is preferred. Specifically, coextrusion is preferred.

The present multilayer structure may undergo a (heat) stretching process, if necessary. The stretching process may be either uniaxial stretching or biaxial stretching. The biaxial stretching may be either simultaneous stretching or sequential stretching. As a stretching method, a method with a high stretch ratio can be employed among roll stretching, tenter stretching, tubular stretching, stretch blow, and vacuum pressure forming methods. The stretching temperature is selected from a range of about typically 40 to 170°C, preferably 60 to 160°C, which is a temperature near the melting point of the multilayer structure. If the stretching temperature is too low, the stretchability is poor. If too high, it is difficult to

maintain a stable stretch state.

Further, the present multilayer structure after the stretching process may be subjected to heat setting for the purpose of imparting dimension stability. The heat setting can be performed by known means. For example, the stretched present multilayer structure is subjected to thermal treatment with a tension state being kept, typically at 80 to 180°C, preferably 100 to 165°C, typically for about 2 to 600 seconds.

When the stretched present multilayer structure is used as a shrinkable film, for example, a cold-setting process for imparting a heat-shrinkable property may be performed by applying cold air to the stretched present multilayer structure, without performing the heat setting.

The thickness of the present multilayer structure (including the stretched multilayer structure) and the thicknesses of the present modified EVOH resin composition layer, the base material resin layer, and the adhesive resin layer that constitute the multilayer structure may vary with the layered configuration, the kind of base material resin, the kind of adhesive resin, intended use, packaging form, required physical properties, and the like, but the thickness of the present multilayer structure (including the stretched multilayer structure) is typically 10 to 5000 μm, preferably 30 to 3000 μm, and particularly preferably 50 to 2000 μm. The thickness of the present modified EVOH resin composition layer is typically 1 to 500 μm, preferably 3 to 300 μm, and particularly preferably 5 to 200 μm. The thickness of the base material resin layer is typically 5 to 3000 μm, preferably 10 to 2000 μm, and particularly preferably 20 to 1000 μm. The thickness of the adhesive resin layer is typically 0.5 to 250 μm, preferably 1 to 150 μm, and particularly preferably 3 to 100 μm.

Further, the thickness ratio of the present modified EVOH resin composition layer to the base material resin layer in the present multilayer structure (present modified EVOH resin composition layer/base material resin layer) is typically 1/99 to 50/50, preferably 5/95 to 45/55, and particularly preferably 10/90 to 40/60, where if these layers each include a plurality of layers, the thickness ratio is the ratio between the thickest one of the present modified EVOH resin composition layers and the thickest one of the base material resin layers). Further, the thickness ratio of the present modified EVOH resin composition layer to the adhesive resin layer in the present multilayer structure (present modified EVOH resin composition layer/adhesive resin layer) is typically 10/90 to 99/1, preferably 20/80 to 95/5, and particularly preferably 50/50 to 90/10, where if these layers each include a plurality of layers, the thickness ratio is the ratio between the thickest one of the present modified EVOH resin composition layers and the thickest one of the adhesive resin layers).

A cup or tray-shaped multilayer container may be produced from the present multilayer structure. In this case, a drawing process is typically employed. Specific examples include vacuum forming method, pressure forming method, vacuum pressure forming method, and plug-assisted vacuum pressure forming method. When a tube or bottle-shaped multilayer container (laminate structure) is produced from a multilayer parison (a hollow tubular preform before blowing), a blow molding process is employed. Specific examples include extrusion blow molding method (twin head type, mold shift type, parison shift type, rotary type, accumulator type, horizontal parison type, etc.), cold parison blow molding method, injection blow molding method, and biaxial stretching blow molding method (extrusion type cold parison biaxial stretching blow molding method, injection type cold parison biaxial stretching blow molding method, injection inline type biaxial stretching blow molding method, etc.). The resulting laminate may be subjected to heating process, cooling process, rolling process, printing process, dry laminating process, solution or melt coating process, bag forming process, deep drawing process, box forming process, tube forming process, splitting process, or the like, if necessary.

Monolayer films produced from the present modified EVOH resin composition, and bags, cups, trays, tubes, bottles, and other containers, and caps produced from the present multilayer structure are useful as various packaging material containers for general foods, condiments such as mayonnaise and dressing, fermented foods such as miso, fat and oil foods such as salad oil, beverages, cosmetics, and pharmaceutical products.

## EXAMPLES

Hereinafter, the present disclosure will be described more specifically with reference to examples. However, the present disclosure is not limited to the following examples.

In the examples, "parts" means parts on a mass basis unless otherwise specified.

### <Example 1>

### [Production of Modified EVOH Resin]

In a twin-screw kneading extruder (TEX30α available from The Japan Steel Works, Ltd.), 100 parts of an EVOH resin (ethylene structural unit content of 32 mol%, degree of saponification of 99.8 mol%, MFR of 3 g/10 minutes (at 210°C with a load of 2160 g)), 47 parts of ε-caprolactone (PLACCEL M available from Daicel Corporation), and 1.4 parts (3 parts per 100 parts of ε-caprolactone) of tin 2-ethylhexanoate (NEOSTANN U-28 available from Nitto Kasei Co., Ltd.) were charged, and transferred to a melting unit set to a residence time of 2 to 3 minutes, and then allowed to react while being melt-kneaded under the following extrusion conditions to produce pellets of a modified EVOH resin (modification rate of 6.9

mol%, aliphatic polyester unit average chain length of 2.3, melting point of 121°C).

[Extrusion Conditions]

Extruder setting temperature (°C):

C2/C3/C4/C5/C6/C7/C8/C9/C10/C11/C12/C13/C14/C15/C16/D

= 80/80/150/150/230/230/230/230/230/230/230/230/230/230/230/230

The modification rate in the modified EVOH resin and the average chain length of the aliphatic polyester unit were calculated by $^1$H-NMR measurement under the following conditions.

[Measurement of Modification Rate and Average Chain Length of Aliphatic Polyester Unit]

(a) $^1$H-NMR measurement conditions

Apparatus: Ascend 400 (400MHz NMR) (from Bruker Corporation) Internal standard material: tetramethylsilane
Solvent: d6-DMSO
Measured polymer concentration: 5% by weight (0.05 g of sample and 1 mL of solvent)
Measurement temperature: 50°C (323K)
Irradiation pulse: 45° pulse
Pulse interval: 10 sec
Number of accumulations: 16

(b) Attribution of Resonance Absorption Peaks

(I) 0.8 to 0.9 ppm: -$CH_3$ at ends of the modified EVOH resin
(II) 1.0 to 1.9 ppm: -$CH_2$- in the main chain of the modified EVOH resin, and -$CH_2$- adjacent to each other in the aliphatic polyester
(III) 2.0 ppm: -$CH_3$ of residual acetyl group of the modified EVOH resin
(IV) 2.1 to 2.3 ppm: -$CH_2$- adjacent to the carboxyl group of the aliphatic polyester
(V) 3.3 to 4.0 ppm : -CH- adjacent to -OH of the modified EVOH resin, and -$CH_2$- adjacent to -OH of the aliphatic polyester
(VI) 4.0 to 4.7 ppm: -OH of the modified EVOH resin and the aliphatic polyester, and -$CH_2$- adjacent to ester bond of the aliphatic polyester (c) Calculation of Modification Rate and Average Chain Length of Aliphatic Polyester Unit

Simultaneous equations (i) to (vi) were formulated using the integral values of resonance absorption peaks of (I) to (VI). The amount of graft-modified groups C (mol) and the average chain length n (number of units) were calculated using the solutions of the simultaneous equations. Further, using equation (vii), the graft modification rate X (mol%) of the aliphatic polyester was calculated.

Equation (i) $3\times M$=[integral value of peak (I)]

$(2\times M)+(2\times A)+(4\times E)+(2\times O)+(6\times n+2)\times C$=[integral value of peak (II)] Equation (ii)

Equation (iii) $3\times A$=[integral value of peak (III)]

Equation (vi) $2\times n\times C$=[integral value of peak (IV)]

$$\text{Equation (v) } O+(2\times C)=[\text{integral value of peak (V)}]$$

$$\text{Equation (vi) } O+(2\times n-1)\times C=[\text{integral value of peak (VI)}]$$

$$\text{Equation (vii) } X=C/(M+A+O+C+E)\times 100$$

Here, M, A, O, C, n, E, and X represent the followings.

M: Amount (mol) of methyl groups at ends of the modified EVOH resin
A: Amount (mol) of acetyl groups of the modified EVOH resin
O: Amount (mol) of hydroxyl groups of the modified EVOH resin
C: Amount (mol) of aliphatic polyester grafted modified groups of the modified EVOH resin
n: Average chain length (number of units) of the aliphatic polyester unit
E: Amount (mol) of ethylene groups of the modified EVOH resin
X: Aliphatic polyester graft modification rate (mol%) of the modified EVOH resin

[Production of Modified EVOH Resin Composition] Titanium oxide (from FUJIFILM Wako Pure Chemical Corporation) was used as the titanium compound.
A mixture was prepared by dry-blending the titanium oxide in the amount of 0.1 ppm on a metal basis per mass of the EVOH resin composition with the resulting pellets of the modified EVOH resin composition.
The mixture was fed to a twin-screw extruder (20 mm in diameter) with a two-hole die, and a strand extruded and ejected under the following extrusion conditions was cooled in a water tank and solidified. The air is blown to the solidified strand to remove water droplets on the surface of the strand, and then the strand was cut into pellets of the modified EVOH resin composition.

[Extrusion Conditions]

$$\text{Extruder setting temperature (°C): C1/C2/C3/C4/C5/C6} = 150/200/210/210/210/210$$

<Example 2>

Pellets of a modified EVOH resin composition was obtained in the same way as in Example 1 except that the amount of titanium oxide on a metal basis was changed to 1 ppm per mass of the EVOH resin composition in Example 1.

<Comparative Example 1>

Pellets of a modified EVOH resin composition was obtained in the same way as in Example 1 except that titanium oxide was not used in Example 1.

<Comparative Example 2>

Pellets of a modified EVOH resin composition was obtained in the same way as in Example 1 except that the amount of titanium oxide on a metal basis was changed to 10 ppm per mass of the EVOH resin composition in Example 1.
The resulting pellets of the modified EVOH resin compositions in Examples 1 and 2 and Comparative Examples 1 and 2 were evaluated for thermal stability as described below. The results are listed in Table 1 below.

[Thermal Stability Evaluation]

The weight loss rate was determined according to the following formula by measuring the weight using a thermogravimeter (Pyris 1 TGA available from Perkin Elmer, Inc.) for 5 mg of the resulting pellets of the EVOH resin composition under a nitrogen atmosphere at a gas flow rate of 20 mL/min and a temperature of 230°C for 1 hour. The low

weight loss rate means that the resin composition is not decomposed, which means that the resin composition has excellent thermal stability.

Weight loss rate (%) = [(weight before heating - weight after heating)/weight before heating] × 100

Table 1

| | Amount of titanium compound on metal basis (ppm) | Thermal stability evaluation |
|---|---|---|
| | | Weight loss rate (%) |
| Example 1 | 0.1 | 8.1 |
| Example 2 | 1 | 9.0 |
| Comparative Example 1 | 0 | 9.8 |
| Comparative Example 2 | 10 | 9.4 |

Table 1 indicates that, compared to the EVOH resin composition containing no titanium compound in Comparative Example 1 and the EVOH resin composition containing a titanium compound in an amount that exceeds a particular range in Comparative Example 2, the EVOH resin compositions containing a particular minute amount of titanium compound in Examples 1 and 2 have a smaller weight loss rate and have excellent thermal stability. Further, multilayer structures having layers made of the EVOH resin compositions of Examples 1 and 2 also have thermal degradation suppressed and have excellent thermal stability.

While specific forms of the embodiments of the present disclosure have been shown in the above examples, the examples are merely illustrative but not limitative. It is contemplated that various modifications apparent to those skilled in the art could be made within the scope of the present disclosure.

INDUSTRIAL APPLICABILITY

The present modified EVOH resin composition allows suppression of thermal degradation during melt molding and therefore is useful for various packaging materials for various foods, condiments such as mayonnaise and dressing, fermented foods such as miso, fat and oil foods such as salad oil, beverages, cosmetics, and pharmaceutical products.

## Claims

**1.** A modified ethylene-vinyl alcohol copolymer composition comprising:

a modified ethylene-vinyl alcohol copolymer including an aliphatic polyester structural unit; and
a titanium compound,
wherein an amount of the titanium compound on a metal basis is 0.001 ppm or more and less than 5 ppm per mass of the modified ethylene-vinyl alcohol copolymer composition.

**2.** The modified ethylene-vinyl alcohol copolymer composition according to claim 1, wherein a modification rate of the aliphatic polyester structural unit in the modified ethylene-vinyl alcohol copolymer is 0.1 to 30 mol%.

**3.** The modified ethylene-vinyl alcohol copolymer composition according to claim 1 or 2, wherein the aliphatic polyester structural unit included in the modified ethylene-vinyl alcohol copolymer has an average chain length of 1.5 to 3.0.

**4.** The modified ethylene-vinyl alcohol copolymer composition according to any one of claims 1 to 3, wherein the aliphatic polyester structural unit is a ring-opened polymer of lactones.

**5.** Pellets comprising the modified ethylene-vinyl alcohol copolymer composition according to any one of claims 1 to 4.

**6.** A multilayer structure comprising at least one layer comprising the modified ethylene-vinyl alcohol copolymer composition according to any one of claims 1 to 4.

7. A method for producing the modified ethylene-vinyl alcohol copolymer composition according to any one of claims 1 to 4, the method comprising melt-mixing a composition raw material comprising the modified ethylene-vinyl alcohol copolymer and the titanium compound.

8. A method for producing the multilayer structure according to claim 6, the method comprising melt-molding a layer comprising the modified ethylene-vinyl alcohol copolymer composition.

## INTERNATIONAL SEARCH REPORT

International application No.
**PCT/JP2023/013066**

**A. CLASSIFICATION OF SUBJECT MATTER**

***C08L 29/04***(2006.01)i; ***B32B 27/28***(2006.01)i; ***C08F 8/00***(2006.01)i; ***C08F 210/02***(2006.01)i; ***C08F 216/06***(2006.01)i; ***C08K 3/11***(2018.01)i; ***C08L 23/08***(2006.01)i
FI: C08L29/04 S; C08F8/00; C08F216/06; C08F210/02; C08K3/11; B32B27/28 102; C08L23/08

According to International Patent Classification (IPC) or to both national classification and IPC

**B. FIELDS SEARCHED**

Minimum documentation searched (classification system followed by classification symbols)

C08L29/04; B32B27/28; C08F8/00; C08F210/02; C08F216/06; C08K3/11; C08L23/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2019-163378 A (MITSUBISHI CHEM CORP) 26 September 2019 (2019-09-26) claim 1, paragraphs [0007], [0028], [0034], [0043]-[0054], [0069]-[0070], [0077], [0081], [0094]-[0095], examples 2, 3, table 1 | 1-8 |
| Y | | 1-8 |
| Y | JP 9-87549 A (DAICEL CHEM IND LTD) 31 March 1997 (1997-03-31) paragraphs [0015]-[0017] | 1-8 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 June 2023** | **20 June 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2023/013066**

| Patent document cited in search report | Publication date (day/month/year) | Patent family member(s) | Publication date (day/month/year) |
|---|---|---|---|
| JP 2019-163378 A | 26 September 2019 | (Family: none) | |
| JP 9-87549 A | 31 March 1997 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2019163379 A